# EUROPEAN PATENT SPECIFICATION

(11) **EP 3 682 171 B1**
(45) Date of publication and mention of the grant of the patent: **23.07.2025**
(21) Application number: 18789213.8
(22) Date of filing: 10.09.2018
(51) Int. Cl.: F24S 30/455, A01G 9/24, H02S 20/20

(54) **SOLAR POWER GENERATION PLANT INSTALLABLE ON AGRICULTURAL INSTALLATIONS**
AUF LANDWIRTSCHAFTLICHEN ANLAGEN INSTALLIERBARE SOLARENERGIEERZEUGUNGSANLAGE
CENTRALE DE PRODUCTION D'ÉNERGIE SOLAIRE POUVANT ÊTRE INSTALLÉE SUR DES INSTALLATIONS AGRICOLES

(30) Priority: 11.09.2017 IT 201700101151
(43) Date of publication of application: 22.07.2020
(73) Proprietor: Rem Tec S.R.L., 46041 Asola (MN) (IT)
(72) Inventor: KNOCHE, Ronald, 92380 Garches (FR); GHIDESI, Giancarlo, 46041 Asola (MN) (IT)
(74) Representative: Di Gennaro, Sergio
(86) International application number: PCT/IB2018/056881
(87) International publication number: WO 2019/049094

(56) References cited:
- EP-A1- 2 345 322
- EP-A1- 2 997 819
- WO-A1-2013/001404
- FR-A1- 3 042 382
- US-A1- 2017 013 789
- US-B1- 9 509 247
- DATABASE WPI Week 201634, Derwent World Patents Index; AN 2016-283024, XP002781389

## Description

The present invention relates to a solar power generation plant formed by a support structure constrained to the ground, preferably an agricultural land, adapted to support a handling system for devices adapted to receive sunlight, for example photovoltaic panels. In particular, the handling system of the present invention allows the handling preferably around two axes X and Y of such devices to allow them to keep photovoltaic panels or other devices adapted to capture the solar energy properly orientated towards the sun.

Such plant is installable on agricultural lands, leaving the possibility of taking advantage of such land for the original purposes, that is for the cultivation of vegetables or animal grazing.

Handling systems of solar panels on two axes are known, which in jargon are called "sun trackers".

The main object of a tracker is the one of maximizing the efficiency of the device accommodated on board. The modules mounted on board a tracker in the photovoltaic field generally are arranged geometrically on a single panel, a practice that avoids the use of a tracker for each individual module. The greater the perpendicular alignment with the solar rays, the greater the conversion efficiency and the energy generated, surface being equal; the smaller the surface of the solar panel required, the lower the plant costs, required production being equal.

The more sophisticated trackers have two levels of freedom with which they set out to perfectly align the orthogonal of the photovoltaic panels with the sun rays in real time. The most affordable - but not only - method for making them is mounting a tracker on board another one. These trackers register increases in electric production that also reach 35%-45%, however against a greater construction complexity.

Such type of sun tracker is shown in Patent Application WO2010103378 , which describes a load-bearing structure formed by supporting piles kept in position by a grid of tie rods; both the supporting piles and the tie rods are secured in the ground by means of a hinge pin.

The sun tracker comprises a horizontal load-bearing main profile, which may rotate around its own axis, to which there are connected a plurality of secondary profiles, perpendicularly secured to the main profile and which may be rotated around their main axis. The solar panels are secured on such secondary profiles. The ends of the main profile of the tracker are resting and secured on such supporting profiles. Also the electric cables for connecting the various panels and load bearings externally using current generated by them are positioned in the main profile.

Patent WO2013076573 describes a support piling structure of such type that also supports wind modules. Such structure is made bi-dimensional like a "chessboard" and may be installed also on agricultural lands because it is overhead and the distance between the supporting piles is such as to allow the passage of even large agricultural means.

Patent Application WO2013117722 describes a method and a solar power generation plant suitable for being installed on an agricultural land. The photovoltaic modules and the support structure in such plant may be oriented so that a cultivated area, which is beneath the modules, is partially shaded. In this case, the orientation of the photovoltaic modules according to the invention allows the incident solar radiation on the cultivated plants.

The Applicant has observed that such support structures for the solar panels not only leave a suitable space for cultivating vegetables, but such space may be used for installing agricultural structures for intensive cultivation, such as for example greenhouses. Moreover, a portion of the power generated by the plant may be used for controlling and feeding the apparatuses in the greenhouse itself.

US9509247 discloses a power generation plant with a support structure placed on agricultural land, with solar energy receptor devices, a greenhouse beneath the receptor devices and an electronic processing unit for controlling movement of the receptor devices and automatic equipment for intensive greenhouse cultivation using a software for calculating the shading of receptor devices.FR3042382 discloses a power generation plant comprising a solar energy receptor device and automatic equipment for intensive greenhouse cultivation.

The present invention relates to a solar power generation plant having the features of the appended claim 1.

Further features of the present invention are contained in the dependent claims.

The features and advantages of the present invention will be more apparent from the following description of an embodiment of the invention, which is to be understood as exemplifying and not limiting, with reference to the attached schematic drawings, wherein:

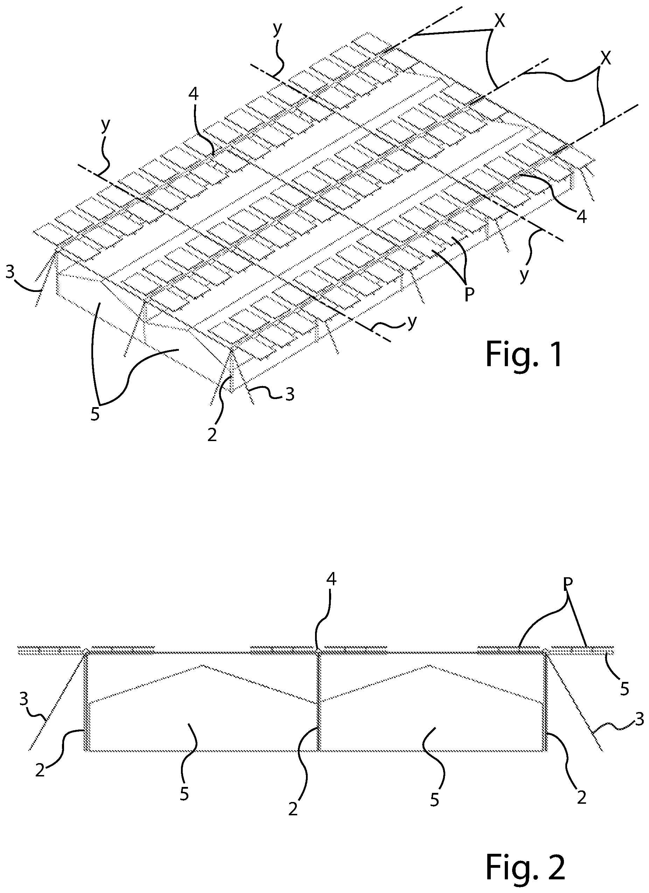

- figure 1 illustrates a perspective view of a plant according to the present invention;
- figure 2 illustrates a front view of the plant of figure 1;

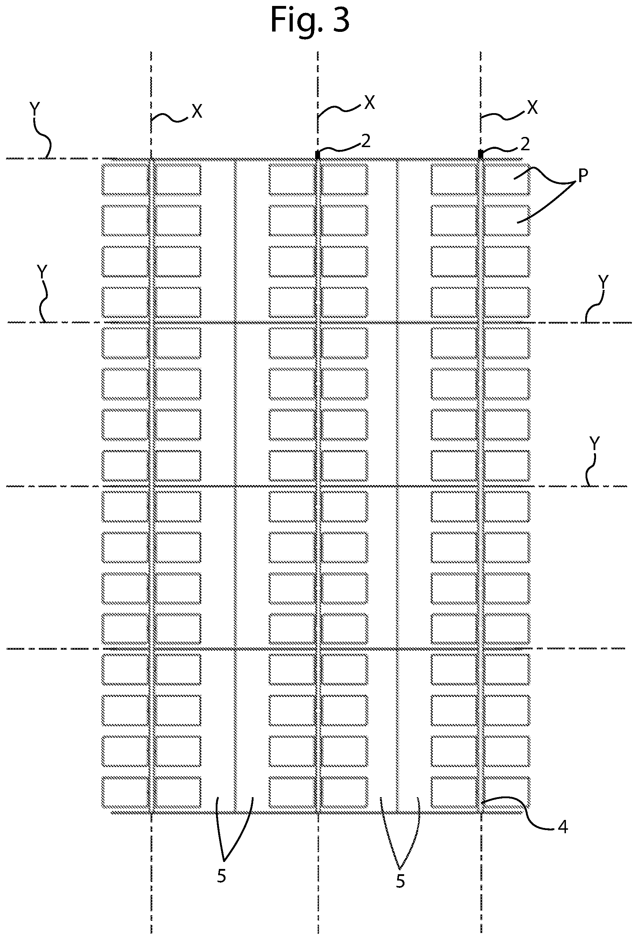

- figure 3 illustrates a top view of the plant of figure 1;
- figures 4 illustrates a block diagram of the control of the plant performed by the electronic control unit,

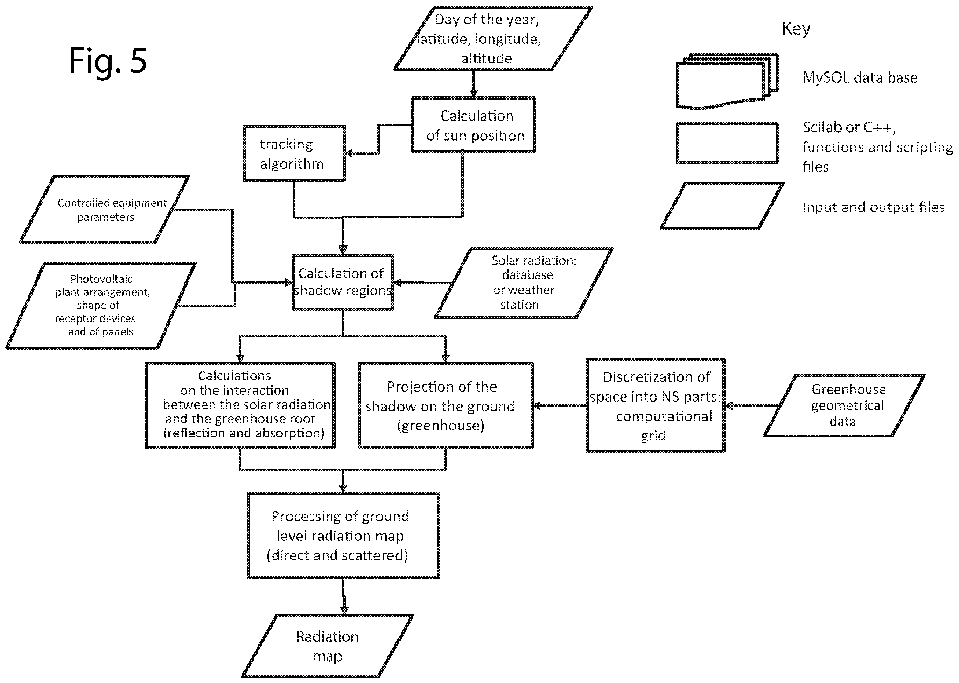

- figures 5 illustrates a block diagram of the software for calculating the shading generated by the photovoltaic modules of the system,

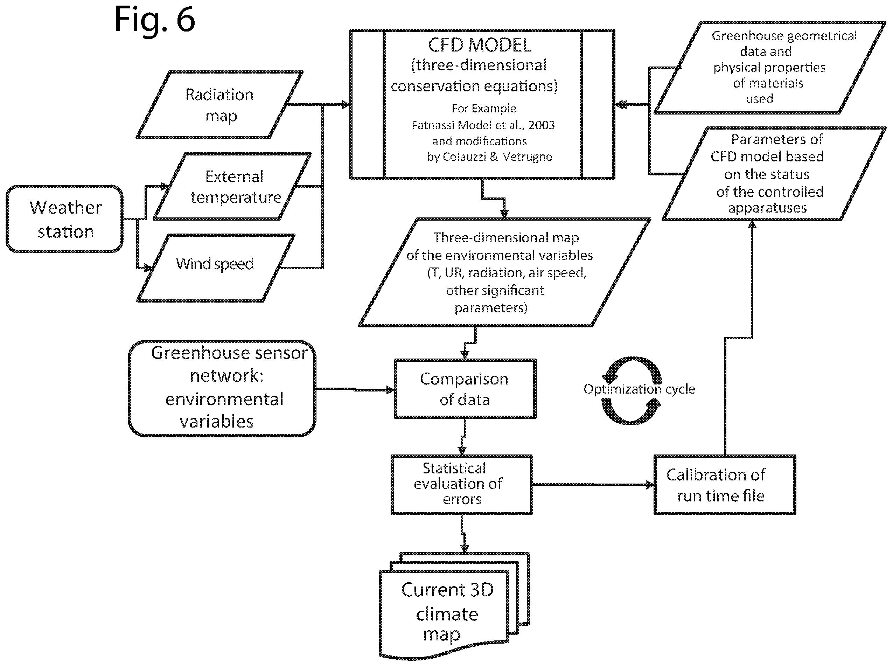

- figures 6 illustrates a block diagram of the software for calculating the climatic conditions of the greenhouse as a function of the shading generated by the receptor devices, of the outdoor environmental conditions, of the features of the greenhouse and of the apparatuses inside the greenhouse itself.

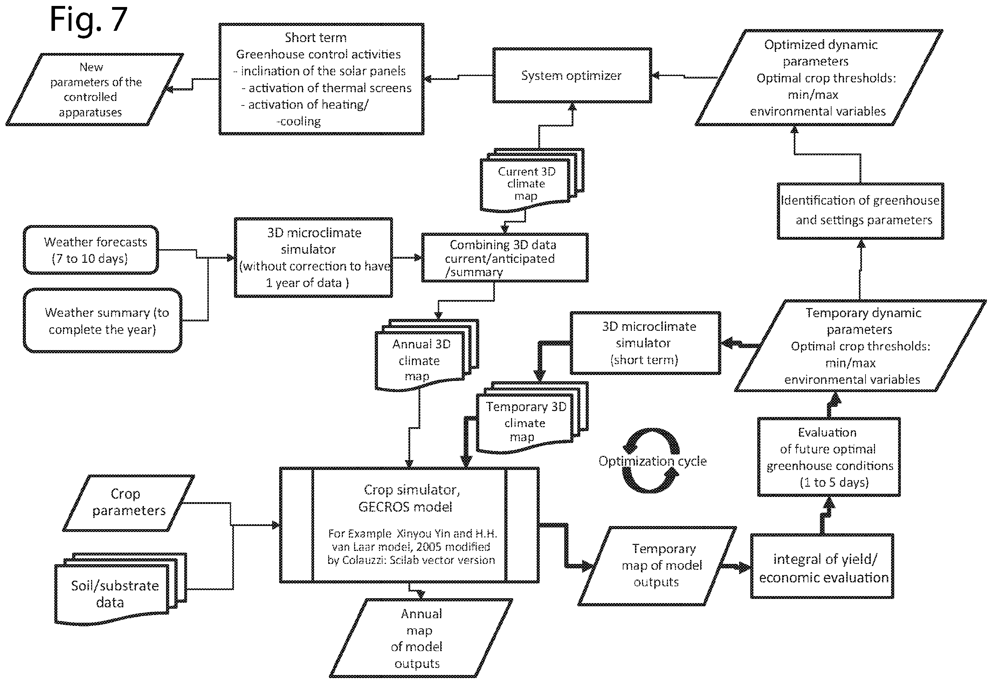

- Figure 7 illustrates a block diagram of the software that manages the interaction between the different apparatuses, including the receptor devices, in order to optimize the conditions inside the greenhouse with respect to the need of the crop and the greenhouse energy balance.

With reference to the mentioned figures, the solar power generation plant according to the present invention allows the handling on a first axis X and a second axis Y substantially orthogonal to each other, of devices adapted to receive sunlight, in order to allow them to keep a correct orientation towards the sun. For example, such devices are photovoltaic panels or other devices adapted to capture solar energy. The plant essentially comprises a support structure formed by supporting piles 2 preferably kept in position by a grid of tie rods or steel bars 3; both the supporting piles and the tie bars are secured in the ground by means of suitable pins, for example hinge pins. Such structure advantageously may be configured bi-dimensional, for example like a "chessboard", and may be installed on agricultural lands, with any orientation, because it is overhead and the distance between the supporting piles is such as to allow the passage of even large agricultural means.

Such support structure alternatively may be made by means of piling made of concrete piles, which will have one portion fastened into the ground and a part out of the ground adapted to give the structure the adequate height off the ground. Said piling may or may not be connected by tie rods or steel bars.

Systems for handling or orientating such solar devices are placed on said support structure and in particular on rows of piles.

Each handling system comprises a main rotating profile 4 that rotates around its own axis, and arranged to operate substantially horizontally, to which there are connected a plurality of secondary profiles 5, preferably secured perpendicularly to the main profile in a rigid manner or alternatively by means of suitable systems adapted to give it the capability to rotate. The receptor devices are fastened on such secondary profiles, in the specific case illustrated, the photovoltaic panels P.

The handling system further comprises a handling mechanism for the primary profiles and as an option, also a handling mechanism for the secondary profiles.

Clearly, the materials for the various components were adequately selected for a proper balancing between weights and sturdiness.

The movements of the motors that allow the aforesaid rotations around the axes X and Y are controlled by a specific electronic processing unit that determines the angle that the panels are to have throughout the day and in all climatic conditions, with feedback by means of specific inclination sensor.

According to the present invention, one or more greenhouses S, arranged between two or more adjacent rows of piles, may be placed on the ground on which the plant is mounted. In the illustrated embodiment, the greenhouses have a dome roof, but greenhouses of any shape and sizes such as to occupy the free space beneath the support structure may alternatively be placed.

The greenhouses may be placed only in a portion of the land or they may completely occupy the ground beneath the plant.

Each greenhouse has therein adequate automatic equipment for intensive cultivation, such as for example air conditioning devices inside the greenhouse, humidifier/dehumidifier devices, shading devices for greenhouse glasses, artificial lighting devices, ventilation devices, rainwater recovery, motorized windows, mobile thermal screens, irrigation devices, and electric power storage devices and heat storage devices.

Advantageously according to the present invention, the electronic processing unit controlling the movement of the receptor devices - such as photovoltaic panels - of the power generating plant may control such equipment to regulate the conditions inside the greenhouse according to the type of crop implanted and optimize the greenhouse energy balance.

For this purpose, in the plant there is a plurality of devices for monitoring the environmental conditions, such as for example sensors of the temperature inside/outside the greenhouse, sensors of the humidity inside/outside the greenhouse, soil humidity sensors, luminosity sensors, solar radiation sensors, atmospheric pressure sensors, sensors for checking the dew point, CO₂ concentration sensors, wind speed and direction gauges and rain sensors, gauges of the air velocity inside the greenhouse. Based on the measurements of such sensors, the electronic processing unit determines the positioning of the photovoltaic panels moment-by-moment and determines the activation of the aforesaid equipment.

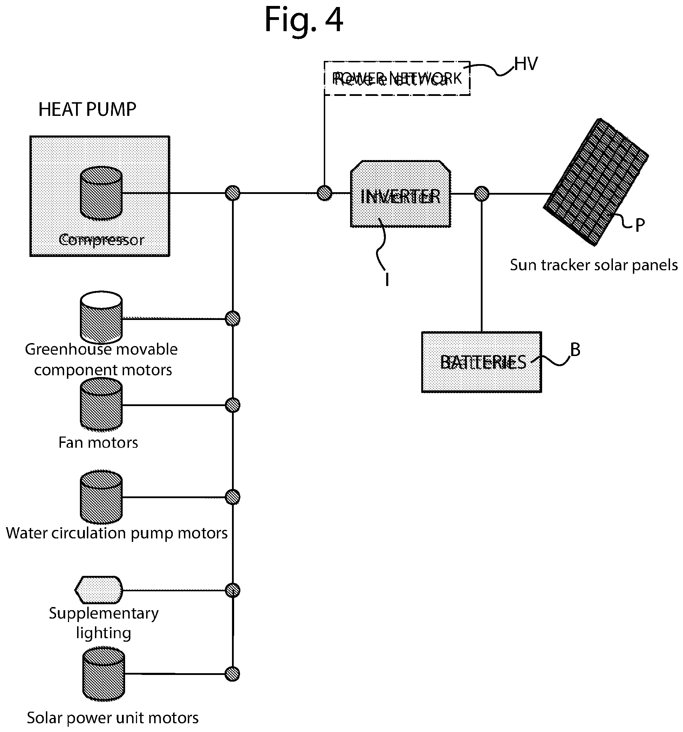

Figure 4 illustrates a block diagram of how the processing unit operates.

In particular, the electrical power required for the greenhouse equipment is obtained from the solar panels P by means of suitable inverters I, which may or may not be connected to the HV electric network. A system for storing the energy B results in the possibility of locally storing such required energy. The unit in particular controls the motors that move the solar panels (first X and second Y axis), the motors that move the window screen shades, fans, etc., compressors, pumps and any other motorized device of the greenhouse. The unit also controls any possible supplementary lighting devices.

## Claims

1. Power generation plant comprising
a support structure formed by supporting piles (2) aligned fixed to the ground, such structure being a bi-dimensional "chessboard" structure placed on an agricultural land, with any orientation,
a handling system for solar energy receptor devices (P) placed on the piles arranged in a row, adapted to allow the movement of such devices around at least a first axis (X),
on the ground beneath such receptor devices, between rows of adjacent piles, one or more greenhouses (S) for intensive cultivation of agricultural products, and such handling system comprising an electronic processing unit capable of controlling the movement of such receptor devices (P),
automatic equipment for intensive greenhouse cultivation using a software for calculating the shading of receptor devices, for calculating the indoor conditions of the greenhouse according to predetermined parameters, for calculating the agricultural yield and energy production, on the basis of current and anticipated data, and for calculating the achievement of the best greenhouse energy balance, taking into account agricultural needs,
said plant comprising a plurality of devices for monitoring environmental conditions in the plant itself inside/outside the greenhouse,
wherein such electronic processing unit controlling the movement of the receptor devices and controls also such equipment to regulate the conditions inside the greenhouse that one wants to obtain, i.e. depending on the type of crop being implanted, by optimizing the greenhouse energy balance based on such conditions,
wherein a portion of the power generated by the plant is used for controlling and feeding the automatic equipment in the greenhouse, such electronic processing unit receiving data from such monitoring devices, accordingly controls the movement of the receptor devices and such equipment for regulating the conditions inside the greenhouse according to the type of crop being implanted and adjust the various devices achieving the best balance between energy production and agricultural production.

2. Plant according to claim 1, wherein said equipment comprises at least one of the following devices: air conditioning devices inside the greenhouse, humidifier/dehumidifier devices, shading devices for greenhouse glasses, artificial lighting devices, ventilation devices, motorized windows, mobile thermal screens, irrigation devices, rainwater recovery, power storage devices and heat storage devices.

3. Plant according to claim 1, wherein such monitoring devices comprise at least one of sensors of the temperature inside/outside the greenhouse, sensors of the humidity inside/outside the greenhouse, soil humidity sensors, gauges of the air velocity inside the greenhouse, luminosity sensors, sensors for checking the dew point, CO2 concentration sensors, wind speed and direction gauges and rain sensors, rain sensors, solar radiation, atmospheric pressure sensors.

4. Plant according to claim 1, wherein the receptor devices are photovoltaic panels.

5. Plant according to claim 1, wherein the receptor devices also rotate around a second axis (Y), substantially orthogonal to the first axis (X).

6. Plant according to claim 5, wherein the handling system comprises a rotating main profile (4) around such first axis (X), to which a plurality of secondary profiles (5) associated with said main profile are connected, the receptor devices (P) being fixed on such secondary profiles.

7. Plant according to claim 6, wherein such system optimization is achieved by taking into account the production forecasts both of the energy component of the receptor devices and of the agricultural component based on the weather forecasts and consequent changes in the internal parameters of the greenhouse.

## Patentansprüche

1. Stromerzeugungsanlage, umfassend
eine Tragstruktur, die durch tragende Pfähle (2) gebildet wird, die fest am Boden ausgerichtet sind, wobei diese Struktur eine zweidimensionale "Schachbrett"-Struktur ist, die auf einem landwirtschaftlichen Land mit beliebiger Orientierung platziert ist,
ein Handhabungssystem für Solarenergie-Empfängervorrichtungen (P), die auf den in einer Reihe angeordneten Pfählen platziert sind, das angepasst ist, um die Bewegung solcher Vorrichtungen um mindestens eine erste Achse (X) zu ermöglichen,
auf dem Boden unter solchen Empfängervorrichtungen, zwischen Reihen von benachbarten Pfählen, ein oder mehrere Gewächshäuser (S) für den intensiven Anbau von landwirtschaftlichen Produkten, und wobei ein solches Handhabungssystem eine elektronische Verarbeitungseinheit umfasst, die in der Lage ist, die Bewegung solcher Empfängervorrichtungen (P) zu steuern,
automatische Ausrüstung für den intensiven Gewächshausanbau unter Verwendung einer Software zur Berechnung der Verschattung von Empfängervorrichtungen, zur Berechnung der Innenraumbedingungen des Gewächshauses nach vorbestimmten Parametern, zur Berechnung des landwirtschaftlichen Ertrags und der Energieproduktion auf der Grundlage aktueller und erwarteter Daten und zur Berechnung der Erreichung der besten Gewächshaus-Energiebilanz unter Berücksichtigung des landwirtschaftlichen Bedarfs,
wobei die Anlage eine Vielzahl von Vorrichtungen zur Überwachung der Umweltbedingungen in der Anlage selbst innerhalb/außerhalb des Gewächshauses umfasst,
wobei eine solche elektronische Verarbeitungseinheit die Bewegung der Empfängervorrichtungen steuert und auch solche Ausrüstung steuert, um die Bedingungen innerhalb des Gewächshauses zu regulieren, die man erreichen möchte, d. h. in Abhängigkeit von der Art der zu implantierenden Kulturpflanze, indem die Energiebilanz des Gewächshauses auf der Grundlage solcher Bedingungen optimiert wird,
wobei ein Teil des von der Anlage erzeugten Stroms zum Steuern und Speisen der automatischen Ausrüstung im Gewächshaus verwendet wird,
eine solche elektronische Verarbeitungseinheit, die Daten von solchen Überwachungsvorrichtungen empfängt, steuert dementsprechend die Bewegung der Empfängervorrichtungen und solcher Ausrüstung zum Regulieren der Bedingungen innerhalb des Gewächshauses gemäß der Art der zu implantierenden Kulturpflanze, und stellt die verschiedenen Vorrichtungen ein, um das beste Gleichgewicht zwischen Energieproduktion und landwirtschaftlicher Produktion zu erreichen.

2. Anlage nach Anspruch 1, wobei die Ausrüstung mindestens eine der folgenden Vorrichtungen umfasst: Klimatisierungsvorrichtungen innerhalb des Gewächshauses, Luftbefeuchter-/Luftentfeuchtervorrichtungen, Beschattungsvorrichtungen für Gewächshausgläser, künstliche Beleuchtungsvorrichtungen, Lüftungsvorrichtungen, motorisierte Fenster, mobile thermische Bildschirme, Bewässerungsvorrichtungen, Regenwasserrückgewinnung, Stromspeichervorrichtungen und Wärmespeichervorrichtungen.

3. Anlage nach Anspruch 1, wobei solche Überwachungsvorrichtungen mindestens einen der folgenden Sensoren umfassen: Sensoren der Temperatur innerhalb/außerhalb des Gewächshauses, Sensoren der Feuchtigkeit innerhalb/außerhalb des Gewächshauses, Bodenfeuchtigkeitssensoren, Messgeräte der Luftgeschwindigkeit innerhalb des Gewächshauses, Helligkeitssensoren, Sensoren zur Überprüfung des Taupunktes, CO2-Konzentrationssensoren, Windgeschwindigkeits- und Richtungsmessgeräte und Regensensoren, Regensensoren, Sonneneinstrahlung, atmosphärische Drucksensoren.

4. Anlage nach Anspruch 1, wobei die Empfängervorrichtungen Photovoltaikpaneele sind.

5. Anlage nach Anspruch 1, wobei sich die Empfängervorrichtungen auch um eine zweite Achse (Y) drehen, die im Wesentlichen orthogonal zur ersten Achse (X) verläuft.

6. Anlage nach Anspruch 5, wobei das Handhabungssystem ein rotierendes Hauptprofil (4) um eine solche erste Achse (X) umfasst, mit dem eine Vielzahl von Nebenprofilen (5) verbunden ist, die mit dem Hauptprofil assoziiert sind, wobei die Empfängervorrichtungen (P) an solchen Nebenprofilen befestigt sind.

7. Anlage nach Anspruch 6, wobei eine solche Systemoptimierung durch Berücksichtigung der Produktionsprognosen sowohl der Energiekomponente der Empfängervorrichtungen als auch der landwirtschaftlichen Komponente auf der Grundlage der Wettervorhersagen und der daraus resultierenden Änderungen der internen Parameter des Gewächshauses erreicht wird.

## Revendications

1. Centrale électrique comprenant
une structure de soutien formée de pieux (2) alignés et fixés au sol, cette structure étant une structure bidimensionnelle en "échiquier" placée sur un terrain agricole, avec n'importe quelle orientation,
un système de manutention pour les récepteurs d'énergie solaire (P) placés sur les piles disposées en rangée, adapté pour permettre le déplacement de ces dispositifs autour d'au moins un premier axe (X),
sur le sol, sous ces récepteurs, entre les rangées de piles adjacentes, une ou plusieurs serres (S) pour la culture intensive de produits agricoles, et ce système de manutention comprenant une unité de traitement électronique capable de commander le déplacement de ces récepteurs (P), équipement automatique pour la culture intensive sous serre utilisant un logiciel pour calculer l'ombrage des récepteurs, pour calculer les conditions intérieures de la serre selon des paramètres prédéterminés, pour calculer le rendement agricole et la production d'énergie, sur la base de données actuelles et anticipées, et pour calculer la réalisation du meilleur bilan énergétique de la serre, en tenant compte des besoins agricoles,
ladite installation comprend une pluralité de dispositifs de surveillance des conditions environnementales dans l'installation elle-même, à l'intérieur ou à l'extérieur de la serre,
l'unité de traitement électronique contrôlant le déplacement des dispositifs récepteurs et contrôlant également ces équipements pour réguler les conditions à l'intérieur de la serre que l'on souhaite obtenir, c'est-à-dire en fonction du type de culture implanté, en optimisant l'équilibre énergétique de la serre sur la base de ces conditions,
dans laquelle une partie de l'énergie produite par la centrale est utilisée pour contrôler et alimenter l'équipement automatique de la serre,
cette unité de traitement électronique, qui reçoit les données de ces dispositifs de surveillance, commande en conséquence le déplacement des dispositifs récepteurs et de ces équipements pour réguler les conditions à l'intérieur de la serre en fonction du type de culture implanté et ajuster les différents dispositifs afin d'obtenir le meilleur équilibre entre la production d'énergie et la production agricole.

2. Installation selon la revendication 1, dans laquelle ledit équipement comprend au moins l'un des dispositifs suivants: dispositifs de climatisation à l'intérieur de la serre, dispositifs d'humidification/déshumidification, dispositifs d'ombrage pour les vitres de la serre, dispositifs d'éclairage artificiel, dispositifs de ventilation, fenêtres motorisées, écrans thermiques mobiles, dispositifs d'irrigation, récupération de l'eau de pluie, dispositifs de stockage de l'énergie et dispositifs de stockage de la chaleur.

3. Installation selon la revendication 1, dans laquelle ces dispositifs de surveillance comprennent au moins un des capteurs de température à l'intérieur/extérieur de la serre, des capteurs d'humidité à l'intérieur/extérieur de la serre, des capteurs d'humidité du sol, des jauges de la vitesse de l'air à l'intérieur de la serre, des capteurs de luminosité, des capteurs pour vérifier le point de rosée, des capteurs de concentration de CO2, des jauges de vitesse et de direction du vent et des capteurs de pluie, des capteurs de pluie, des capteurs de rayonnement solaire, des capteurs de pression atmosphérique.

4. Installation selon la revendication 1, dans laquelle les dispositifs récepteurs sont des panneaux photovoltaïques.

5. Installation selon la revendication 1, dans laquelle les dispositifs récepteurs tournent également autour d'un deuxième axe (Y), sensiblement orthogonal au premier axe (X).

6. Installation selon la revendication 5, dans laquelle le système de manutention comprend un profilé principal (4) tournant autour de ce premier axe (X), auquel sont connectés plusieurs profilés secondaires (5) associés audit profilé principal, les dispositifs récepteurs (P) étant fixés sur ces profilés secondaires.

7. Installation selon la revendication 6, dans laquelle cette optimisation du système est réalisée en prenant en compte les prévisions de production à la fois de la composante énergétique des dispositifs récepteurs et de la composante agricole sur la base des prévisions météorologiques et des changements conséquents dans les paramètres internes de la serre.
